# EUROPEAN PATENT APPLICATION

(11) **EP 1 578 076 A1**
(43) Date of publication of application: **21.09.2005**
(21) Application number: 03782930.6
(22) Date of filing: 26.12.2003
(51) Int. Cl.: H04L 25/49, H04L 7/00

(54) **SYMBOL POSITION DETECTION DEVICE AND SYMBOL POSITION DETECTION METHOD**

(30) Priority: 27.12.2002 JP 2002381104
(71) Applicant: MATSUSHITA ELECTRIC INDUSTRIAL CO., LTD., Osaka 571-8501 (JP)
(72) Inventor: MIZUGUCHI, Yuji, Hirakata-shi, Osaka 573-0162 (JP); YASUI, Nobuhiko, Moriguchi-shi, Osaka 570-0017 (JP); KATTA, Noboru, Kawasaki-shi, Kanagawa 216-0005 (JP); SAKAI, Takahisa, Yokohama-shi, Kanagawa 224-0003 (JP); TAKAHIRA, Yutaka, Neyagawa-shi, Osaka 572-0083 (JP); KAWADA, Hirotsugu, Osaka-shi, Osaka 543-0043 (JP); UMEI, Toshitomo, Settsu-shi, Osaka 566-0033 (JP); AKITA, Takashi, Osaka-shi, Osaka 532-0022 (JP); YOSHIKAWA, Takefumi, Nishinomiya-shi, Hyogo 662-0871 (JP); DOSHO, Shiro, Ikeda-shi, Osaka 563-0024 (JP)
(74) Representative: Pautex Schneider, Nicole Véronique
(86) International application number: PCT/JP2003/016917
(87) International publication number: WO 2004/062223

(57) **Abstract**

To a data reception device, a signal having a frequency of 12.5 MHz and including data is transmitted. The data reception device generates a clock B having a frequency of 400 MHz of (1) in FIG. 8, and performs sampling for the above-described 12.5 MHz signal based on the clock B ((2) in FIG. 8). Then, the data reception device detects zero cross points of the sampled data, and generates a 25 MHz frequency clock signal indicating the zero cross points ((3) in FIG. 8). Next, the data reception device generates, by delaying the generated clock signal by the time amount corresponding to eight clocks ((4) in FIG. 8), a 25 MHz signal indicating symbol points. Thus, symbol points can be detected.

## Description

### TECHNICAL FIELD

The present invention is an invention relating to a symbol position detection device, and more specifically, is an invention relating to a symbol position detection device detecting a position of a symbol in a data signal transmitted, based on a clock signal having a predetermined frequency.

### BACKGROUND ART

It is known that there is a conventional data reception device which receives an electrical signal or an optical signal transmitted by a data transmission device, and determines a signal level of the electrical signal or the optical signal by reproducing a clock signal to synchronize with the data transmission device, for example. The data reception device such as this generally detects differences in frequency and phase of a transmitted clock signal, and controls a frequency and phase of a clock signal oscillated by an oscillation section of the device based on the differences (for example, see International Publication WO02/30078 pamphlet).

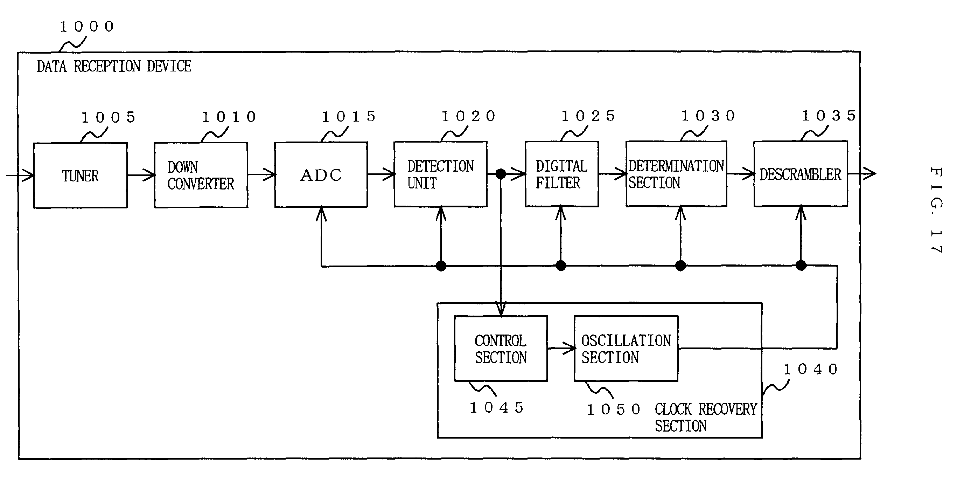

FIG. 17 is a block diagram illustrating a configuration of the above-described commonly-used data reception device. The data reception device illustrated in FIG. 17 is a data reception device for CATV (Cable Television), and includes a tuner 1005, a down converter 1010, an ADC (analog digital converter) 1015, a detection unit 1020, a digital filter 1025, a determination section 1030, a descrambler 1035, and a clock reproduction section 1040. Also, the clock reproduction section 1040 includes a control section 1045 and an oscillation section 1050.

A scramble process is applied to CATV data and all of signal levels are almost equally included in received data symbols. As a transmission scheme for CATV, a quadrature amplitude modulation such as 16 QAM (Quadrature Amplitude Modulation), 64 QAM, or the like is used and coaxial cables are usually used for transmission paths.

Hereinafter, operations of the conventional data reception device illustrated in FIG. 17 are described.

A QAM modulation signal received via a coaxial cable is frequency converted through the tuner 1005 and the down converter 1010, and the QAM modulation signal corresponding to one channel is inputted to the ADC 1015. The QAM modulation signal corresponding to one channel is converted to a digital signal in the ADC 1015, and separated into I signal and Q signal for demodulation in the detection unit 1020. Then, after the QAM signal is noise filtered in the digital filter 1025, data symbols are reconstructed in the determination section 1030 and a descramble process is performed in the descrambler 1035 for data acquisition. Further, the control section 1045 of the clock reproduction section 1040 detects, from clock signals of the I signal and the Q signal, differences in frequency and phase between the clock signals and a clock signal oscillated by the oscillation section 1050, and controls the frequency and phase of the clock signal oscillated by the oscillation section 1050. Thus, each constituent section of the data reception device 1000 can operate in clock synchronization with the data transmission device.

### DISCLOSURE OF THE INVENTION

A VCO (Voltage Controlled Oscillator) is commonly used for the above-described conventional oscillation section 1050. The VCO is an oscillation unit capable of changing oscillatory frequencies by control voltage, and has a merit of being available at an inexpensive price. However, the VCO has a problem that control thereof is very difficult because an amount of change in an oscillatory frequency is very large compared to an amount of change in control voltage.

To solve the above-described problem, VCXO (Voltage Controlled Crystal Oscillators) may be used for the aforementioned oscillation section 1050. In the VCXO, the amount of change in oscillatory frequency is small compared to the amount of change in control voltage, thereby having a merit of being easily controlled. However, the VCXO has a problem of being expensive compared to the VCO.

Therefore, the object of the present invention is to provide a symbol position detection device which can easily clock synchronize with a data transmission device, and is included in a data reception device which can be inexpensively manufactured.

In the present invention, signal generation means generates a second clock signal having a frequency of an integral multiple of a frequency of a first clock signal; data value acquisition means acquires a data value of a data signal based on timing of the second clock signal generated by high frequency clock signal generation means; clock component extraction means extracts a component of the first clock signal from the data value acquired by the data value acquisition means; zero cross detection means detects, as a zero cross point, a timing at which a magnitude relationship with respect to a predetermined criterion level is inverted for the component of the first clock signal extracted by the clock component extraction means; and symbol position detection means detects, as a symbol position of the data signal, a time at which a time period corresponding to the predetermined number of clocks for the second clock signal is elapsed from the zero cross point detected by the zero cross detection means.

Further, the data signal may be a signal in which the magnitude relationship with respect to the predetermined criterion level is alternately inverted from symbol to symbol.

Further, the zero cross detection means detects, as the zero cross point, a clock whose position corresponding to a timing closest to the timing at which the magnitude relationship with respect to the predetermined criterion level is inverted for the first clock signal component extracted by the clock component extraction means.

Further, the zero cross detection means may compare an absolute value of a data value for a clock positioned immediately before and an absolute value of a data value for a clock positioned immediately after the timing at which the magnitude relationship between the data value and the predetermined criterion level is inverted for the first clock signal component extracted by the clock component extraction means, and determines that the clock of which the absolute value of the data value is the smaller is a clock whose position corresponding to a timing closest to the timing at which the magnitude relationship with respect to the predetermined criterion level is inverted.

Further, the clock determined as a position of a symbol in a data signal by the symbol position detection means may be a timing at which the predetermined number of clocks are passed from the zero cross point.

Further, the symbol position detection means may output a third clock signal with a timing when a symbol position is detected.

Further, the zero cross detection means may output the third clock signal when a time period corresponding to the predetermined number of clocks is elapsed from the zero cross point.

Further, determination means may determine a data value of a symbol in a data signal based on timing of the third clock signal outputted by the symbol detection means.

Further, output clock signal generation means may generate a low jitter fourth clock signal and output means may externally output the data value determined by the determination means, based on the fourth clock signal generated by the output clock signal generation means.

Further, the zero cross detection means may detect, as the zero cross point, a timing at which "positive"/"negative" signs of the first clock signal component extracted by the clock component extraction means are inverted.

Further, the zero cross detection means may detect, as the zero cross point, the timing at which the "positive"/"negative" signs of the first clock signal component are inverted.

Further, the data signal may be a signal in which the "positive"/"negative" signs of data values are alternately inverted from symbol to symbol.

Further, output clock generation means may generate the fourth clock signal on the basis of the third clock signal.

Further, the integer may be a multiple of four.

Further, the predetermined number of clocks may be the number of clocks in which the number is obtained by multiplying one-fourth with the multiple of four.

Note that the present invention is not only directed to a symbol position detection device but also a symbol detection method performed by the symbol position detection device.

According to the present invention, a detection of a symbol position is possible without finely controlling a frequency of the second clock created by the high frequency clock signal generation means. Further, according to the above-described first invention, the symbol position detection device can be inexpensively manufactured because an inexpensive VCO can be applied to a part of the high frequency clock signal generation means.

Further, data signals invariably include a component of the first clock signal, allowing the clock component extraction means to easily extract the first clock signal component.

Further, even in the case where there is no clock data with a value which is at exactly a predetermined criterion level, it is possible to detect a clock corresponding to the zero cross point.

Further, a clock taken as the zero cross point is obtained through a simple method of comparing the absolute value of the data value for the clock immediately before and the absolute value of the data value for the clock immediately after the timing at which the magnitude relationship with respect to a predetermined level of data is inverted. Therefore, a load on the zero cross detection means can be reduced and a configuration of the zero cross detection means can be simplified.

Further, sampling is performed with the second clock signal having a frequency which is an integral multiple of four and the first clock signal, and therefore, a symbol point is a point at which a time period corresponding to the number of clocks equivalent to a product of one-fourth and a multiple of four is elapsed from a zero cross point. Therefore, it is possible to easily identify a symbol point.

Further, the third clock signal is outputted with a timing when a symbol position is detected, allowing the symbol position detection device and devices connected to the symbol position detection device to use the third clock signal. Further, the third clock signal is generated through a delay process, and therefore, the third clock signal can be easily generated compared to a case where a signal is regenerated.

Further, the third clock signal is a clock signal associated with a symbol position, allowing the determination means to detect the data value based on the third clock.

Further, the data value is outputted to the external of the symbol position detection device based on the low jitter fourth clock signal, and therefore, the devices connected to the symbol position detection device can acquire data with few errors.

Further, it is possible to detect a symbol position without finely controlling the frequency of the second clock signal created by a high frequency clock signal generation step. Furthermore, according to the above-described ninth invention, the symbol position detection method can be inexpensively realized because an inexpensive VCO can be applied to a part of a transmission unit used by the high frequency clock signal generation step.

Further, data signals invariably include the component of the first clock signal, allowing the clock component extraction means to easily extract the first clock signal component.

### BRIEF DESCRIPTION OF THE DRAWINGS

FIG. 1 is a block diagram illustrating a configuration of a data transmission device 10 according to an embodiment of the present invention.
FIG. 2 is a block diagram illustrating a configuration of a data reception device 100 according to an embodiment of the present invention.
FIG. 3 is a table illustrating a relationship among parallel data, symbol values B(k) to be mapped, and symbol values B(k-1) immediately before the symbol values B(k) to be mapped.
FIG. 4 is a diagram illustrating waveforms of digital data which have been mapped by a mapping section 20 being converted to analog signals by DAC 30.
FIG. 5 is a diagram illustrating waveforms of digital data which have been mapped by the mapping section 20 being converted to analog signals by the DAC 30.
FIG. 6 is a diagram illustrating an exemplary analog signal outputted by the DAC 30.
FIG. 7 is a block diagram illustrating a detailed configuration of a clock reproduction section 125 according to an embodiment of the present invention.
FIG. 8 is a diagram illustrating a state of a signal outputted by each constituent section of the data reception device 100.
FIG. 9 is a diagram illustrating a state where a zero cross point and a symbol point are detected.
FIG. 10 is a block diagram illustrating an exemplary configuration of a digital filter 130 according to an embodiment of the present invention.
FIG. 11 is a diagram illustrating an exemplary determination level used when determining a signal level by a determination section 135 according to an embodiment of the present invention.
FIG. 12 is a table for converting the determination level determined by the determination section 135 into data transmitted by the data transmission device 10.
FIG. 13 is a flowchart illustrating operations performed by the clock reproduction section 125 of the data reception device 100.
FIG. 14 is a flowchart illustrating operations performed by a zero cross detection section 205.
FIG. 15 is a block diagram illustrating another exemplary configuration of the digital filter 130 according to an embodiment of the present invention.
FIG. 16 is a block diagram illustrating another exemplary configuration of the data reception device 100 according to an embodiment of the present invention.
FIG. 17 is a block diagram illustrating a configuration of a conventional data reception device.

### BEST MODE FOR CARRYING OUT THE INVENTION

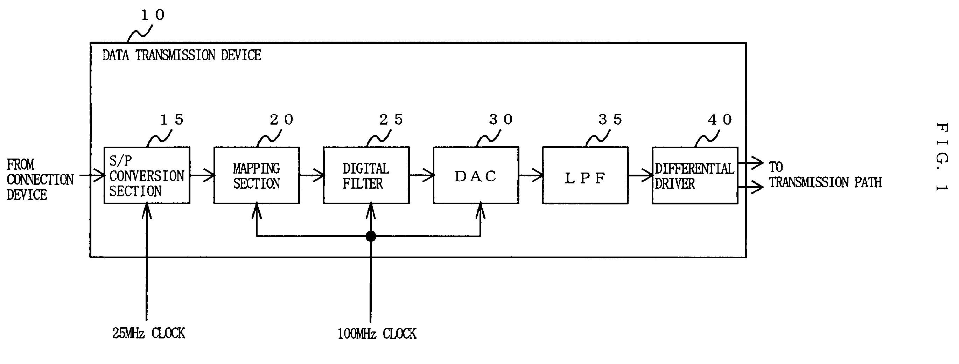

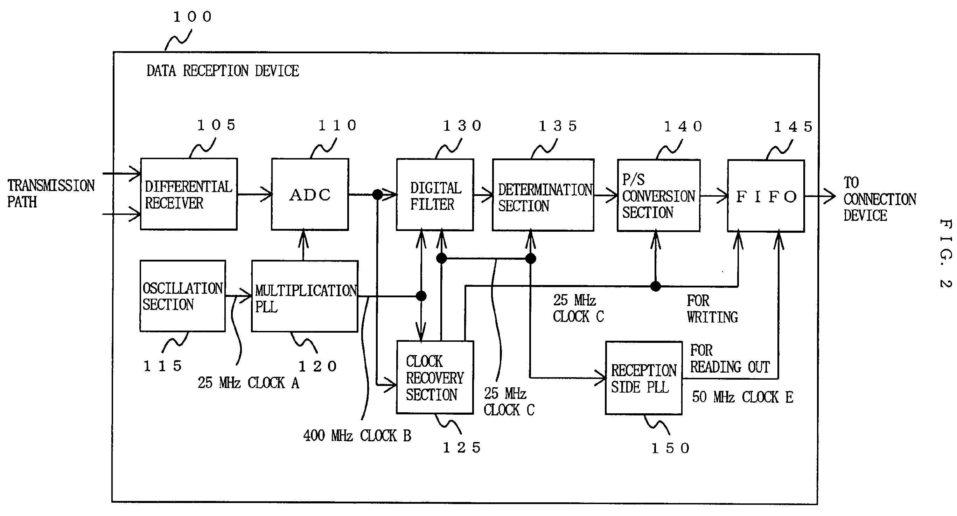

Referring to FIGS. 1 and 2, a data reception device, which includes a symbol position detection device according to an embodiment of the present invention, and a data transmission system are described. FIG. 1 is a block diagram illustrating a configuration of a data transmission device for the data transmission system according to the present embodiment. FIG. 2 is a block diagram illustrating a configuration of the data reception device for the data transmission system according to the present embodiment.

A data transmission device 10 illustrated in FIG. 1 includes a S/P conversion section 15, a mapping section 20, a digital filter 25, a DAC 30, an LPF (low pass filter) 35, and a differential driver 40. The data transmission device 10 is connected to connection devices (for example, audio devices, navigation devices, or information terminal devices), subjects data outputted by the connection device to a predetermined process, and outputs the processed data, as an electrical signal, to a transmission path. A data reception device 100 includes a differential receiver 105, an ADC 110, an oscillation section 115, a multiplication PLL 120, a clock reproduction section 125, a digital filter 130, a determination section 135, a P/S conversion section 140, an FIFO 145, and a reception side PLL 150. The data reception device 100 is connected to connection devices (for example, audio devices, navigation devices, or information terminal devices), receives the electrical signal outputted, by the data transmission device 10, to the transmission path, and outputs digital data obtained from the electrical signal to the connection device. For the transmission paths, inexpensive cables such as twisted pair lines or coaxial cables are used, and the data transmission device and the data reception device perform electrical communications with each other.

Here, a communication protocol for an information system used in the above-described data transmission system is described. One example of the communication protocol for an information system used in the data transmission system is Media Oriented Systems Transport (hereinafter, referred to as "MOST"). In the case where the communication protocol is MOST, the data transmission device of FIG. 1 and the data reception device of FIG. 2 can be used as a transmission section and a reception section of a data transmission device illustrated in Figure 1 of International Publication WO-02/30079, respectively. Then, a plurality of data transmission devices are connected in a ring form to constitute a ring-type network as illustrated in Figure 2 of International Publication WO-02/30079. Data to be transmitted using MOST as a communication protocol is transmitted on a frame-by-frame basis such that frames are sequentially transmitted among the data transmission devices 1 in a unidirectional fashion. Hereinafter, the description continues assuming that the communication protocol for the data transmission system according to the present embodiment is MOST.

The following is a detailed description of the data transmission device 10 according to the present embodiment. The data transmission device 10 typically includes an LSI, converts digital data outputted by a connection device to an electrical signal based on inputted clocks of 25 MHz and 100 MHz, and outputs the signal to the data reception device 100 via a transmission path.

The S/P conversion section 15 converts the digital data outputted by the connection device from serial to parallel in order to perform a multivalued transmission. In the case where the communication protocol is MOST, serial data of 50 Mbps is outputted by a controller 2, and therefore the S/P conversion section 15 converts the inputted serial data to 2-bit parallel data. The mapping section 20 maps, based on the above-described 100 MHz clock, the 2-bit parallel data converted by the S/P conversion section 15 to symbols with one of eight values. In this mapping technique, the 2-bit parallel data is alternately allocated to, among the eight values, either upper four symbols or lower four symbols for performing a clock reproduction in the data reception device 100. Also, the mapping is performed with a difference between a value and a value immediately before the value to exclude the effect of change or difference in direct current components between transmission and reception.

The digital filter 25 is a waveform shaping filter for limiting a band of an electrical signal to be transmitted and suppressing an intersymbol interference. For example, used for the digital filter 25 is a 33-tap, 12-bit FIR filter which operates under a sampling frequency (100 MHz) four times a symbol rate (25 MHz), and has a characteristic of roll off rate 100 % being route partitioned.

The DAC 30 converts the signal whose band is limited by the digital filter 25 into an analog signal. The LPF 35 attenuates a frequency, higher than the signal band, of the signal outputted by the DAC 30. The differential driver 40 amplifies the intensity of the analog signal outputted by the LPF 35, and converts the amplified signal to a differential signal for sending to a transmission path. For the transmission path having a set of two leads, the differential driver 40 transmits a to-be-sent electrical signal to one side (plus side) of the lead of the transmission path, and transmits, to the other side (minus side) of the transmission path, a signal of which "positive"/"negative" signs are inverted from that of the electrical signal. In the transmission path there is transmitted an electrical signal of plus side and minus side as a pair, whereby it is possible to reduce the influence of noise radiated from the transmission path and an in-phase noise externally introduced.

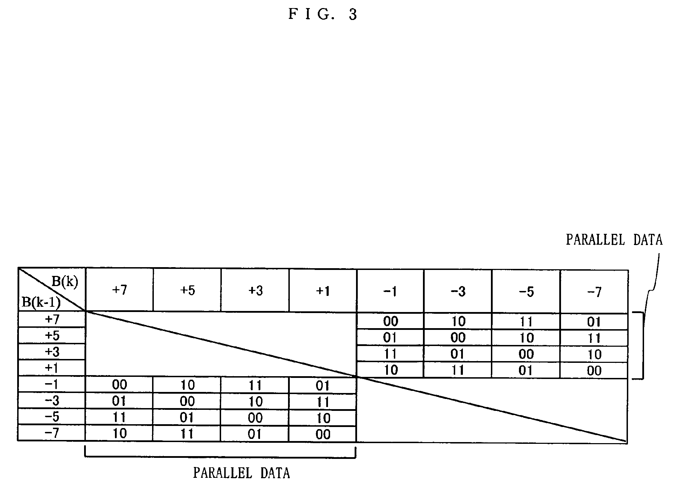

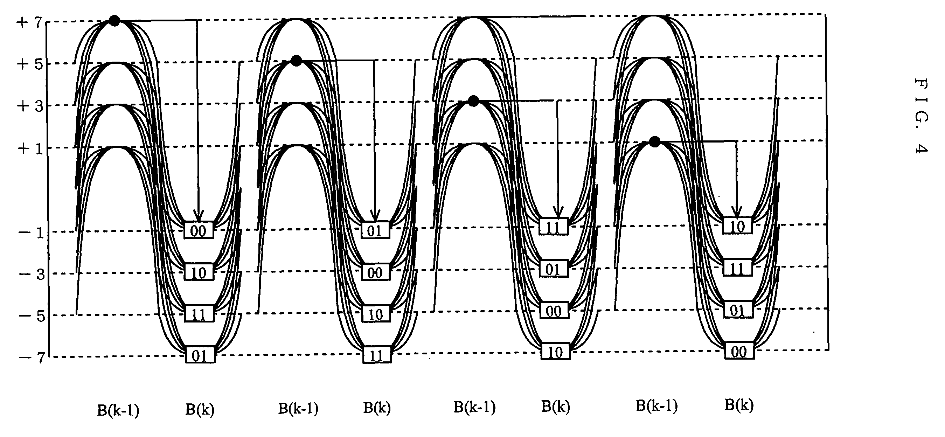

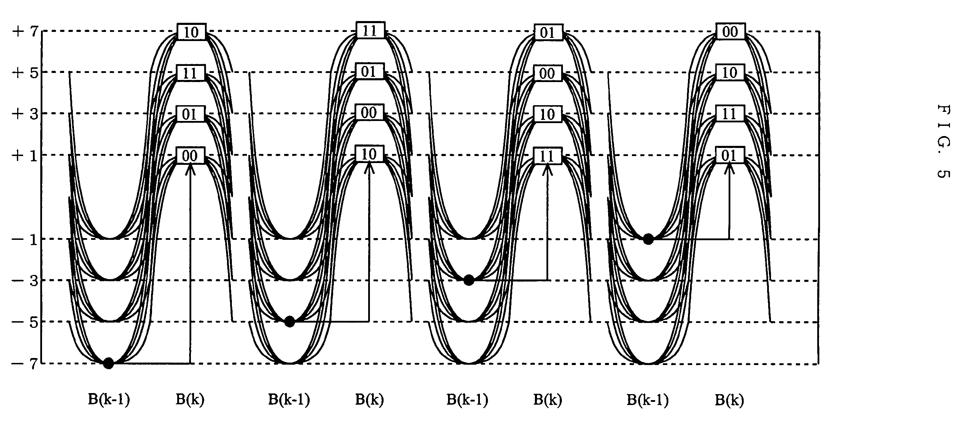

Here, the mapping performed by the mapping section 20 is described in detail with reference to FIGS. 3 to 5. FIG. 3 is a table illustrating relationships among parallel data, symbol values B(k) to be mapped, and symbol values B(k-1) immediately before the symbol values B(k) to be mapped. FIGS. 4 and 5 are diagrams illustrating waveforms converted, by the DAC 30, from digital data mapped by the mapping section 20 to analog signals.

First, 2-bit parallel data such as "00" or "01" is inputted to the mapping section 20. Here, the mapping section 20 maps the obtained data to one of eight values, i.e., +7, +5, +3, +1, -1, -3, -5, or -7, in accordance with the table illustrated in FIG. 3. A mapping method is described with specific examples.

For example, in the case where a previous symbol value B(k-1) is -1 and parallel data "00" is inputted to the mapping section 20, a current symbol value B(k) is +7 . On the other hand, in the case where the symbol value B(k-1) is +5 and parallel data "01" is inputted to the mapping section 20, the current symbol value B(k) of is -1. In other words, in the mapping technique of the present embodiment, the current symbol value B(k) is obtained based on the previous symbol value B(k-1) and inputted parallel data. Through such a method, symbol values B (k) are alternately mapped to either "positive" or "negative". Then, the obtained symbol value B(k) is inputted to the DAC 30 via the digital filter 25.

The DAC 30 generates analog signals such as illustrated in FIGS. 4 and 5 based on the outputted symbol values B(k). Here, FIGS. 4 and 5 are described in detail.

FIG. 4 is a diagram illustrating symbol values B(k) in the case where previous symbol values B(k-1) are +7, +5, +3, or +1, when parallel data "00", "01", "11", or "01" is inputted. For example, as illustrated in FIG. 4, in the case where the previous symbol value B(k-1) is +7, when serial data "00" is inputted, an analog signal is generated such that the current symbol value B(k) is -1.

On the other hand, FIG. 5 is a diagram illustrating symbol values B(k) in the case where previous symbol values B(k-1) are -7, -5, -3, or -1, when parallel data "00", "01", "11", or "01" is inputted. For example, as illustrated in FIG. 5, in the case where the previous symbol value B(k-1) is -7, when serial data "00" is inputted, an analog signal is generated such that the current symbol value B(k) is +1.

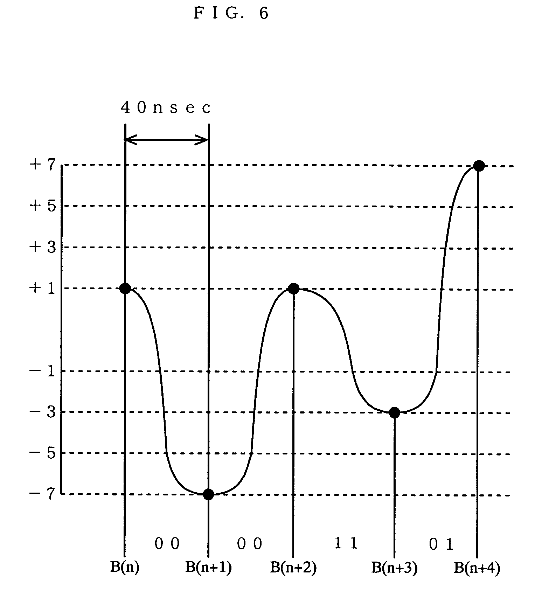

Based on the above, there is provided an exemplary analog signal which is generated in the case where a first symbol value B(n) is +1 and parallel data "00", "00", "11", and "01" are sequentially inputted in the described order. FIG. 6 is a state of an analog signal outputted by the differential driver 40 in the above-described case.

Firstly, the first symbol value B(n) is +1, and therefore a mapping to the position of +1 is performed. Next, when parallel data "00" is inputted, the mapping to the position of -7 is performed based on the right most wave of FIG. 4. Next, when parallel data "00" is inputted, the mapping to the position of +1 is performed based on the left most wave of FIG. 5. Next, when parallel data "11" is inputted, the mapping to -3 is performed based on the right most wave of FIG. 4. Next, when parallel data "01" is inputted, the mapping to +7 is performed based on the wave second from the right of FIG. 5. Through the aforementioned process, the analog signal illustrated in FIG. 6 is generated. Note that an interval between symbols for analog signals in the present embodiment is 40 nsec, and the analog signals invariably include a frequency component of 12.5 MHz.

Next, the data reception device 100 according to the present embodiment is described in detail. The data reception device 100 typically includes an LSI, reproduces a clock from a signal transmitted via a transmission path, reads out digital data from the analog signal based on the reproduced clock, and outputs the data to a connection device.

The differential receiver 105 converts a differential signal inputted from the transmission path into a voltage signal, and outputs the converted signal to an ADC 110. As described above, for the transmission path having a set of two leads, an electrical signal of plus side and minus side are transmitted as a pair and the differential receiver 105 determines the signal with the difference between the plus side and the minus side. Therefore, it is effective against the influence caused by an externally introduced in-phase noise. Then, the ADC 110 converts the voltage signal outputted by the differential receiver 105 into a digital signal in accordance with a 400 MHz clock B outputted by a later described multiplication PLL 120.

An oscillation section 115 generates a 25 MHz frequency clock A, which is asynchronous to the data transmission device 10, and is realized by a crystal oscillator or a crystal oscillation unit, for example. The multiplication PLL (Phase Locked Loop) 120 includes a VCO, and generates the 400 MHz clock B having a frequency sixteen times the clock A outputted by the oscillation section 115. Note that, the frequency of the clock B is not limited to sixteen times as described above. Also, the frequency of the clock A is not limited to 25 MHz.

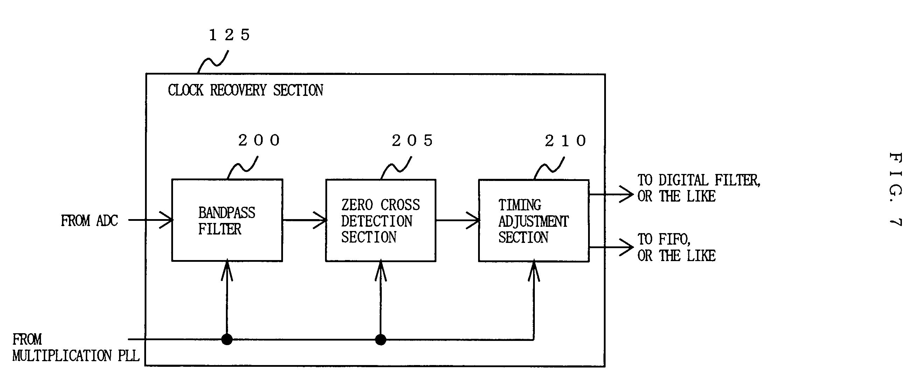

The clock reproduction section 125 reproduces a clock of the data transmission device 10 by extracting and reproducing the 12.5 MHz clock component invariably included in the signal which is outputted by the ADC 110 and received from the transmission path, and includes a bandpass filter 200, a zero cross detection section 205, and a timing adjustment section 210, as illustrated in FIG. 7. The clock reproduced by the clock reproduction section 125 is used as a clock in each constituent section. Here, the detail of the clock reproduction section 125 is described with reference to FIG. 7.

The bandpass filter 200 extracts, from the signal received from the transmission path, a signal having a frequency of a clock component. Note that the bandpass filter 200 of the present embodiment extracts a signal having a frequency of 12.5 MHz because the interval between symbols is 40 nsec.

The zero cross detection section 205 detects points where the clock component extracted by the bandpass filter 200 crosses at zero. The timing adjustment section 210 delays an output of a clock, by a predetermined timing, from the zero cross point detected by the zero cross detection section 205. Note that the timing adjustment section 210 of the present embodiment outputs a 25 MHz frequency clock C so that the determination section 135 described later can determine digital data values contained in symbol points in the 12.5 MHz frequency signal. Further, the timing adjustment section 210 outputs a 50 MHz frequency clock D so that the P/S conversion section 140 and the FIFO 145 can process 25 MHz serial data.

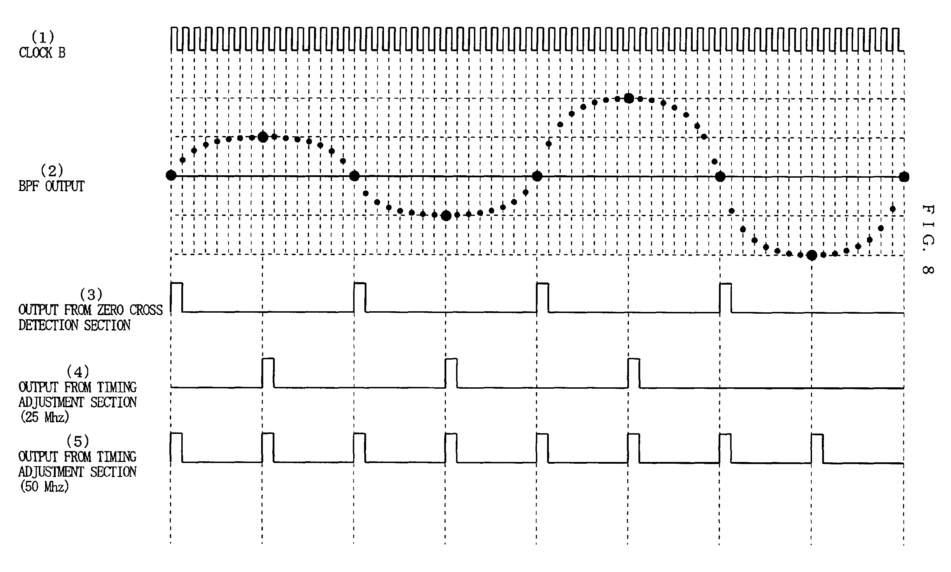

Hereinafter, operations performed by the zero cross detection section 205 and the timing adjustment section 210 are described in detail with reference to FIG. 8.

First, the bandpass filter 200 operates upon receiving the 400 MHz clock B illustrated in (1) of FIG. 8 from the multiplication PLL 120, extracts the digital data values for the 12.5 MHz frequency signal in accordance with the clock B, and outputs the digital data values such as illustrated in (2) of FIG. 8 to the zero cross detection section 205.

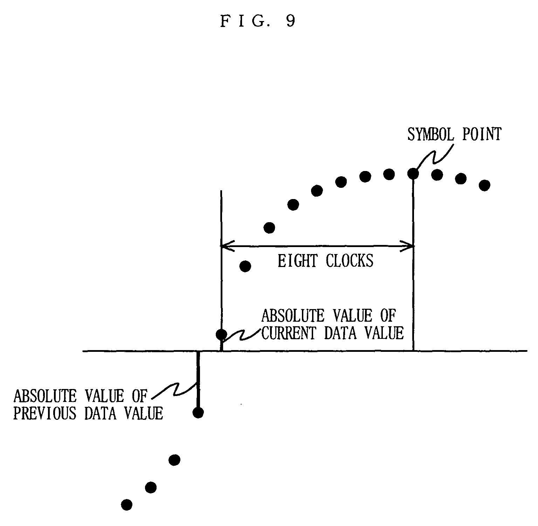

The zero cross detection section 205 operates upon receiving the 400 MHz clock B illustrated in (1) of FIG. 8 from the multiplication PLL 120, and detects zero cross points in the signal outputted from the bandpass filter 200 in accordance with the clock B. Here, by using FIG. 9, a zero cross detection method is described. FIG. 9 is an enlarged view of a neighborhood of a zero cross point of FIG. 8.

As illustrated in FIG. 9, the digital data values for the signal outputted by the bandpass filter 200 may not fall on the zero axis exactly. Therefore, in such a case, the zero cross detection section 205 monitors the sign of digital data values, compares, at the time of the sign inversion, an absolute value of the digital data value against an absolute value of a digital data value one clock prior to the digital data value, and takes the clock whose absolute value of the digital data value is the smaller as the zero cross point.

Through such a zero cross detection method as described above, a signal such as illustrated in (3) of FIG. 8 is outputted by the zero cross detection section 205.

Next, the timing adjustment section 210 delays the clock, which indicates the zero cross points detected by the zero cross detection section 205, by eight clocks, and outputs the 25 MHz clock C indicating timings for symbol points ((4) of FIG. 8). Also, the timing adjustment section 210 delays an output of the 50 MHz clock D ((5) of FIG. 8) by timings corresponding to eight clocks and sixteen clocks from the clock taken as the zero cross point by the zero cross detection section 205. Here, the description for the operations performed by the zero cross detection section 205 and the timing adjustment section 210 is ended.

Now, the description returns to the data reception device 100 of FIG. 2. The digital filter 130 is a waveform shaping FIR filter performing noise filtering for a digital signal outputted by the ADC 110. For example, a FIR filter of sixteen times a symbol rate is used. In connection with the aforementioned transmission side digital filter 25, a roll off characteristic with no intersymbol interference is realized.

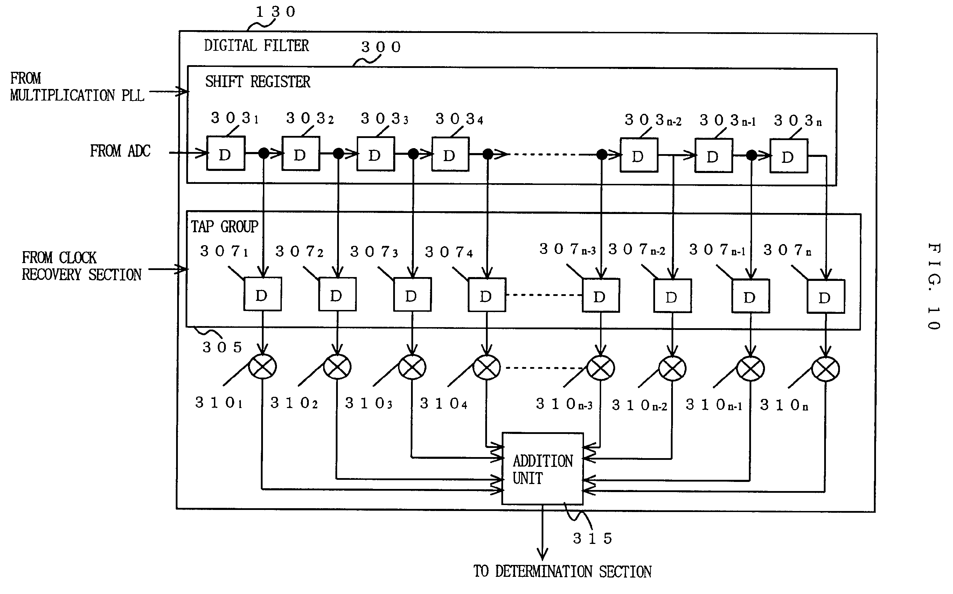

Here, an exemplary configuration of the digital filter 130 is described with reference to FIG. 10. FIG. 10 is a diagram illustrating an example of the configuration of the digital filter 130.

The digital filter 130 includes a shift register 300, a tap group 305, multiplication units 310_{1 to n}, and an addition unit 315. The shift register 300 includes n taps 303_{1 to n,} acquires one digital data value from the ADC 110, and discards one oldest digital data value therein. Also, the tap group 305 includes n taps 307_{1 to} ₙ, and acquires digital data values from the taps 303_{1 to n}. Here, the clock C is a clock indicating positions for symbol points, and therefore, the tap group 305 acquires, from the shift register 300, digital data values of and around the symbol points. The digital filter 130 is a 113-tap, 10-bit FIR filter having a characteristic of roll off rate 100% being route partitioned, for example. Note that the shift register 300 operates based on the 400 MHz frequency clock B from a multiplication PLL 1220. On the other hand, the tap group 305 operates based on the 25 MHz frequency clock C from the clock reproduction section 125. Processing operations of the tap group 305 and constituent sections thereafter are more complex compared to a processing operation of the shift register 300. Therefore, in order to ensure a processing time for the tap group 305 and constituent sections thereafter, the operation clock for the tap group 305 is one-sixteenth of that of the shift register 300.

Note that digital data values stored in the tap 303₁ are acquired by the tap 307₁. Also, digital data values stored in the tap 303₂ are acquired by the corresponding tap 307₂. Hereinafter, the same is applied to the tap 303₃ and thereafter.

The multiplication units 310_{1 to n} multiply the digital data value outputted by the taps 307_{1 to n} with a previously defined predetermined value. Note that the previously defined predetermined value is a sampling frequency sixteen times the symbol rate, for example, and is the value for realizing a characteristic of roll off rate 100% being route partitioned. Lastly, the addition unit 315 adds the digital data values outputted by the multiplication units 310_{1 to n.} Through this, the digital data value of a symbol point is outputted by the addition unit 315 in accordance with a 25 MHz frequency. Here, the detailed description for the digital filter 130 is ended.

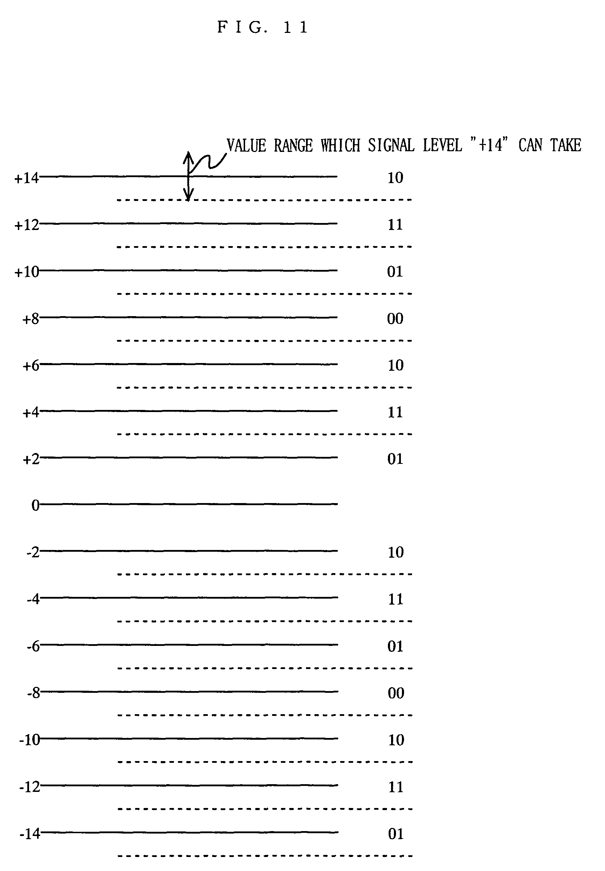

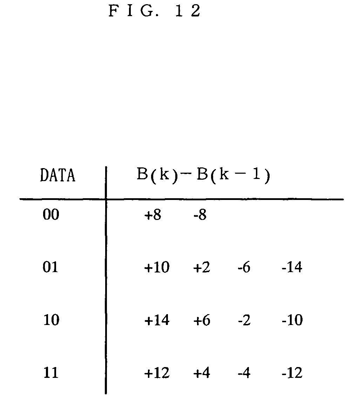

The determination section 135 determines the data transmitted by the data transmission device 10 based on the digital data value outputted by the digital filter 130 . More specifically, the determination section 135 calculates a difference value between the outputted digital data value of a symbol and a digital data value of a symbol one symbol prior to the digital data value of the symbol, and acquires parallel data transmitted by the data transmission device 10 based on the difference value. Now, referring to FIGS. 11 and 12, a determination process performed by the determination section 135 is described in detail. FIG. 11 is a diagram illustrating determination levels used when the determination section 135 determines a digital data value. FIG. 12 is a table for converting the determination level determined by the determination section 135 into data transmitted by the data transmission device 10.

First, the determination section 135 acquires, from the digital filter 130, a digital data value of one symbol. Next, the determination section 135 checks a digital data value one symbol prior to the acquired digital data value. Then, the determination section 135 subtracts the digital data value which is one symbol previous to the acquired digital data value from the acquired digitaldatavalue. Note that, in the present embodiment, a digital data value is one of the values, +7, +5, +3, +1, -1, -3, -5, and -7, and therefore, the value (hereinafter, referred to as a "signal level") obtained by the determination section 135 thorough the subtraction is one of the values, +14, +12, +8, +6, +4, +2, -2, -4, -6, -8, -10, -12, and -14.

In the determination section 135, a determination level for a signal level is set, as illustrated in FIG. 11. Each determination level has a certain range for which to determine a signal level depending on where in the level range it falls in. The determination section 135 determines the signal level obtained through the subtraction by using the determination levels illustrated in FIG. 11. Then, the determination section 135 converts the determined signal level based on the table illustrated in FIG. 12 into the parallel data transmitted by the data transmission device 10. Note that, the table illustrated in FIG. 12 is a table illustrating relationships between values, which are B(k) minus B(k-1), and parallel data.

The P/S conversion section 140 converts the parallel data determined by the determination section 135 into serial digital data for output to the FIFO 145.

The reception side PLL 150 generates a low jitter 50 MHz clock E based on the 25 MHz clock C for output to the FIFO 145.

The FIFO 145, to which the serial data from the P/S conversion section 140 is written based on the clock D, outputs the serial data to a connection device based on the low jitter clock E from the reception side PLL 150. The process is performed because, according to the data reception device 100 of the present embodiment in which the data reception device 100 operates with a clock asynchronous to that of the data transmission device 10 and a clock closest to the zero is chosen for the clock at a zero cross point as illustrated in FIG. 9, the number of clocks between symbols is not constantly sixteen and therefore jitter of about ± 1 can occur occasionally. Through the reception side PLL 150 reading out the low jitter clock at the frequency same as a clock frequency at which writing is performed to the FIFO 145, low jitter serial data is caused to be outputted to the connection device.

An operation of the data transmission system configured as above is described below. Note that, each process presented in the present embodiment can be realized software-wise using a computer, or by using a dedicated hardware circuit conducting each such process.

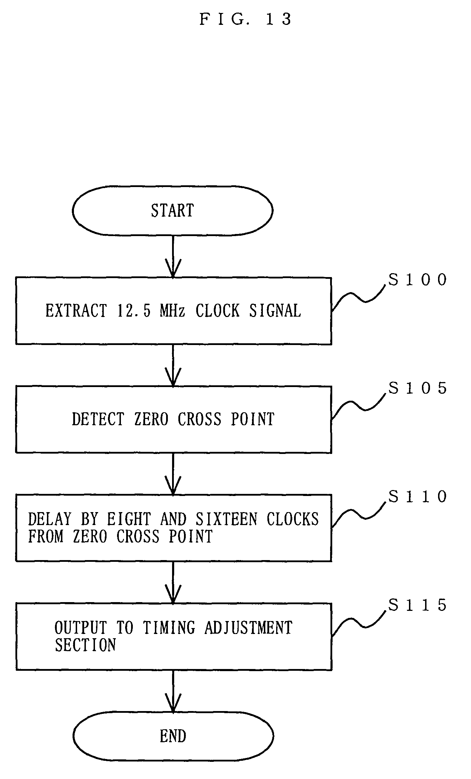

An operation performed by the data transmission system according to the present embodiment is described with reference to the figures. FIG. 13 is a flowchart illustrating an operation to be performed by the clock reproduction section 125 of the data reception device 100. Note that, hereinafter, it is assumed that an electrical signal such as illustrated in FIG. 6 is transmitted by the data device device 10, and operations performed by the data transmission device 10 is omitted.

First, the differential receiver 105 receives an electrical signal such as illustrated in FIG. 6 transmitted by the data transmission device 10 via a transmission path. On the other hand, the oscillation section 115 generates the 25 MHz frequency clock A, which is asynchronous to the data transmission device 10, and outputs the generated clock to the multiplication PLL 120. The multiplication PLL 120 causes the acquired clock A to be the 400 MHz clock signal B, and outputs the clock signal B to the ADC 110, the digital filter 130, and the clock reproduction section 125.

The ADC 110 converts the signal outputted by the differential receiver 105 into a digital signal in accordance with the clock B outputted by the multiplication PLL 120, and outputs the converted signal to the digital filter 130 and the clock reproduction section 125.

The digital signal outputted by the ADC 110 to the clock reproduction section 125 includes a plurality of frequencies. The bandpass filter 200 extracts a 12.5 MHz frequency signal included in the reception signal (step S100). Note that, when extracting the above 12.5 MHz frequency signal, the bandpass filter 200 performs the extraction process based on the clock B outputted by the multiplication PLL 120. Through the process, a signal including data values such as illustrated in (2) of FIG. 8 is outputted by the bandpass filter 200.

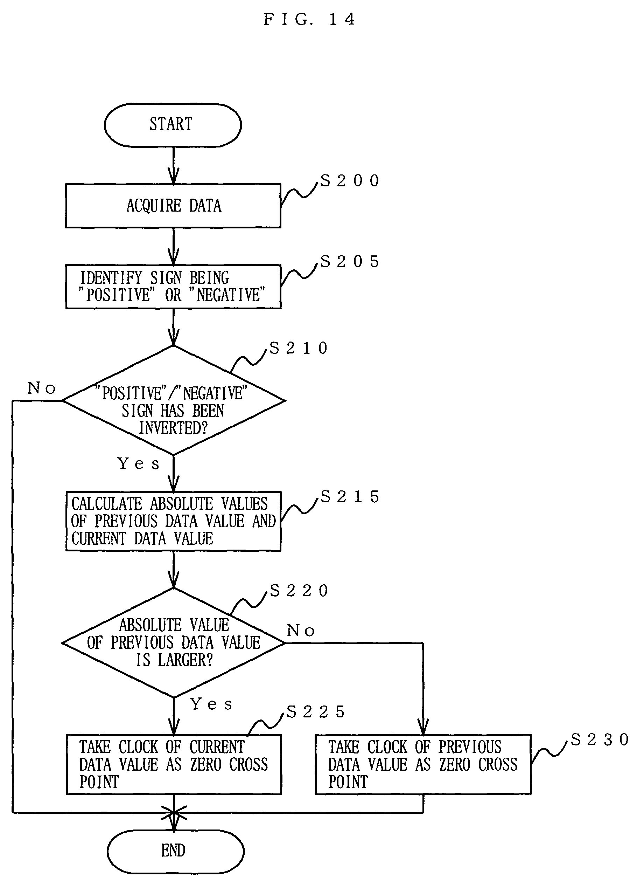

Next, the zero cross detection section 205 refers to the data values for the outputted signal to detect zero cross points. Operations performed by the zero cross detection section 205 are described with reference to the figures. FIG. 14 is a flowchart illustrating the operations performed by the zero cross detection section 205 at this time.

Firstly, the zero cross detection section 205 acquires a digital data value outputted by the bandpass filter 200 (step S200) .

Next, the zero cross detection section 205 identifies whether the sign of the acquired digital data value is "positive" or "negative" (step S210). The zero cross detection section 205 having identified whether the sign of the digital data value is "positive" or "negative" determines if the "positive"/ "negative" sign of acquired digital data value has been inverted with respect to a digital data value acquired from a clock previous to the acquired digital data value (step S210). In the case where the "positive"/" negative" sign has been inverted, the process proceeds to step S210. On the other hand, in the case where the "positive"/"negative" sign has not been inverted, the process is ended. In such a case, the zero cross detection section 205 acquires a next digital data value to perform a similar process.

In the case where the "positive" /"negative" sign is inverted, the zero cross detection section 205 calculates an absolute value of the digital data value acquired from the previous clock and an absolute value of the data value acquired from the current clock (step S215). Then, the zero cross detection section 205 determines whether the absolute value of the digital data value acquired from the previous clock is larger than the absolute value of the digital data value acquired from the current clock (step S220) . In the case where the absolute value of the digital data value acquired from the previous clock is larger, the process proceeds to step S225. On the other hand, in the case where the absolute value of the digital data value acquired from the previous clock is not larger, the process proceeds to step S230.

In the case where the absolute value of the digital data value acquired from the previous clock is larger, the zero cross detection section 205 determines that the digital data value acquired from the current clock is closer to the zero cross point, and takes a timing of the digital data value acquired from the current clock as the zero cross point (step S225). Thereafter, the process is ended and the zero cross point acquires a next digital data value to perform a similar process to the above-described process.

In the case where the absolute value of the digital data value acquired from the previous clock is not larger, the zero cross detection section 205 determines that the digital data value acquired from the previous clock is closer to the zero cross point, and takes a timing of the digital data value acquired from the previous clock as the zero cross point (step S230). Thereafter, the process is ended, and the zero cross point acquires a next digital data value to perform a similar process to the above-described process. Here, the description for the operations performed by the zero cross detection section 205 is ended.

Through the operations of the above-described zero cross detection section 205, the zero cross detection section 205 outputs a 25 MHz clock such as illustrated in (3) of FIG. 8. In response, the timing adjustment section 210 acquires the clock outputted by the zero cross detection section 205.

The timing adjustment section 210 delays the acquired clock by a time amount equivalent to eight clocks, and outputs the 25 MHz clock C illustrated in (4) of FIG. 8 to the digital filter 130, the determination section 135, and the reception side PLL 150. Further, the timing adjustment section 210 combines the clock delayed, from the acquired clock, by the time amount equivalent to eight clocks and a clock delayed, from the acquired clock, by a time amount equivalent to sixteen clocks to generate the 50 MHz clock D illustrated in (5) of FIG. 8, and outputs the combined clock to the P/S conversion section 140 and the FIFO 145.

Next, the reception side PLL 150 generates the no jitter 50 MHz clock D based on the 25 MHz clock C outputted by the clock reproduction section 125, and outputs the generated clock to the FIFO 145.

On the other hand, based on the 25 MHz clock C outputted by the clock reproduction section 125, the digital filter 130 performs sampling for only digital data values corresponding to symbol points among digital data values outputted in accordance with the 400 MHz clock B from the ADC 110, and outputs the sampled values to the determination section 135.

The determination section 135 performs a determination process based on the digital data value of a symbol point outputted by the digital filter 130, and outputs it, as 2 bits parallel data, to the P/S conversion section 140.

The P/S conversion section 140 converts the acquired parallel data into serial digital data in accordance with the 50 MHz clock D outputted by the clock reproduction section 125, and outputs the converted data to the FIFO 145.

Next, the FIFO 145 stores the serial digital data outputted by the P/S conversion section 140 in accordance with the 50 MHz clock D outputted by the clock reproduction section 125. Then, the FIFO 145 outputs the serial digital data to a connection device based on the 50 MHz clock E outputted by the reception side PLL 150. Therefore, the connection device connected to the data reception device 100 can acquire the digital data outputted by the connection device of the data transmission device 10.

As aforementioned, with the data reception device 100 including the symbol position detection device according to the present embodiment, it is not required to finely control a frequency of a signal oscillated by the oscillation section 115, allowing an easy clock synchronization with the data transmission device 100. In addition, an inexpensive VCO can be applied to the multiplication PLL 120, allowing an inexpensive construction of the symbol position detection device and the data reception device 100.

Also, with the data reception device 100 including the symbol position detection device according to the present embodiment, the FIFO 145 outputs data to the connection device based on the no jitter clock generated by the reception side PLL 150. As a result, the connection device can acquire data with few errors.

Note that, in the data reception device 100 including the symbol position detection device according to the present embodiment, it is assumed that MOST is applied as a communication protocol. However, the communication protocol is not limited to MOST.

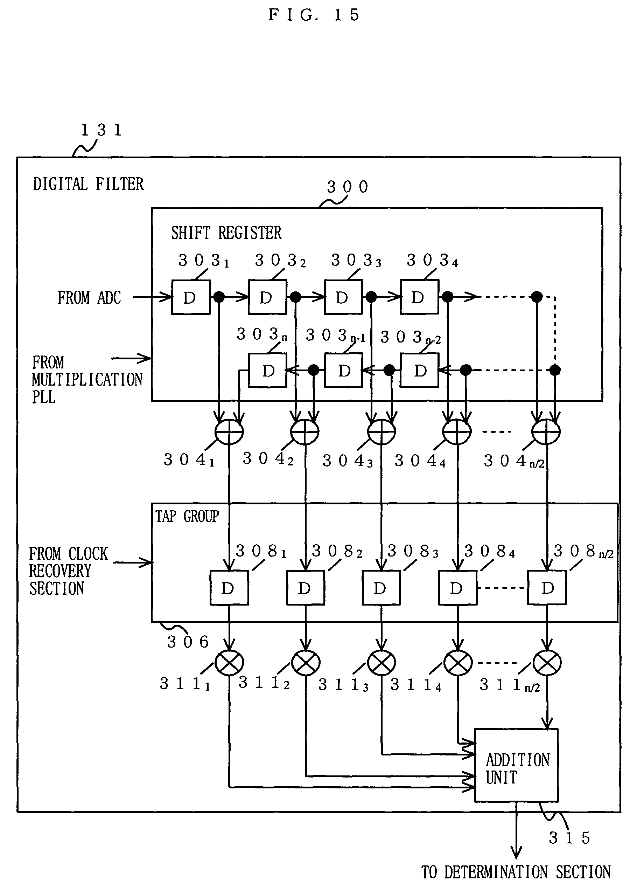

In the data reception device 100 including the symbol position detection device according to the present embodiment, a digital filter such as illustrated in FIG. 10 is applied as the digital filter 130 but the digital filter 130 is not limited thereto. More specifically, a digital filter 131 such as illustrated in FIG. 15 may be used. Hereinafter, the digital filter 131 illustrated in FIG. 15 is described.

The digital filter 131 includes a shift register 300, addition units 304_{n/2}, a tap group 306, multiplication units 311₁ _{to n/2}, and an addition unit 315. Also, the shift register 300 includes n taps 303_{1 to n,} as with the shift register 300 of FIG. 10. The tap group 306 includes n/2 taps 308_{1 to n/2}, unlike the tap group 305 of FIG. 10.

Here, a reason for the digital filter 131 illustrated in FIG. 15 being configured as above is described. Values, which are multiplied by the multiplication units 310_{1 to n} of the digital filter 131 illustrated in FIG. 10, are symmetrical values with respect to the 310_{n/2}.

Therefore, in the digital filter 131 illustrated in FIG. 15, the taps 303 containing data to which a same value is multiplied are paired and the data is firstly added in the addition unit 304. Then, the addition unit 304 outputs the added data to the tap group 306.

Thereafter, the multiplication units 311_{1 to n/2} multiply the data outputted by the tap group 306 with a value same as the value multiplied by the multiplication units 310_{1 to n/2} of FIG. 10. Next, the addition unit 315 adds the data outputted by the multiplication units 310_{1 to n/2}. Therefore, the digital filter 131 of FIG. 15 can acquire an output result similar to that of the digital filter 130 of FIG. 10.

With the digital filter 131 illustrated in FIG. 15, the number of taps and the multiplication units 310 can be half of that of the digital filter 130 of FIG. 10.

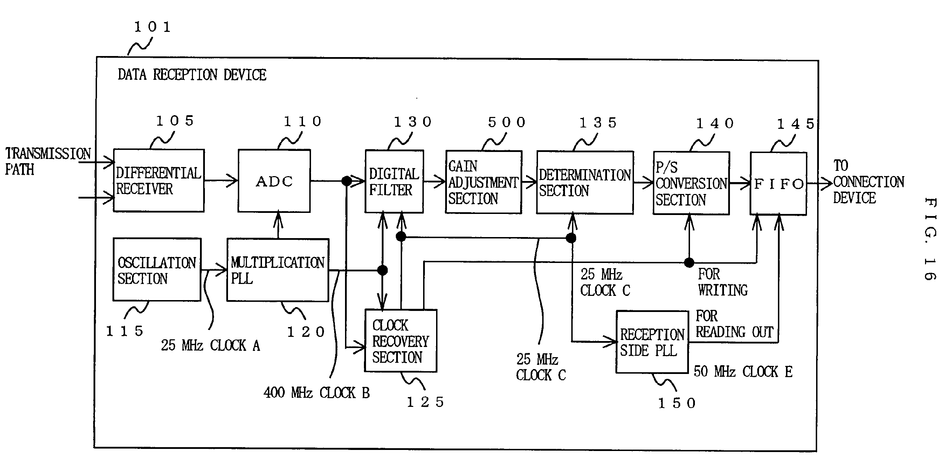

Note that, in the data reception device 100 according to the present embodiment, a configuration illustrated in FIG. 16 is also possible. In the data reception device 101 illustrated in FIG. 16, a gain adjustment section 500 is provided between the digital filter 130 and the determination section 135 of the data reception device 100 illustrated in FIG. 2. The gain adjustment section 500 is realized by a multiplication unit, detects the amount of change in amplitude due to change in temperature or the like, and plays a role in adjusting the amplitude to an ideal amplitude value.

Note that, frequencies of clocks used in the present embodiment and frequencies of signals invariably included in reception signals are examples only, and the frequencies of clocks to be used and the frequencies of signals invariably included in the reception signals are not limited thereto.

### INDUSTRIAL APPLICABILITY

A symbol position detection device according to the present invention can easily clock synchronize with a data transmission device, has an advantage of being inexpensively manufacturable, and is useful as a symbol position detection device or the like detecting a symbol position of a data signal transmitted based on a first clock signal having a predetermined frequency.

## Claims

1. A symbol position detection device detecting a position for a symbol of a data signal transmitted based on a first clock signal having a predetermined frequency, the device comprising:
high frequency clock signal generation means for generating a second clock signal having a frequency of an integral multiple of a frequency of the first clock signal;
data value acquisition means for acquiring a data value of the data signal based on timing of the second clock signal generated by the high frequency clock signal generation means;
clock component extraction means for extracting a component of the first clock signal from the data value acquired by the data value acquisition means;
zero cross detection means for detecting, as a zero cross point, a timing at which a magnitude relationship with respect to a predetermined criterion level inverted for the component of the first clock signal extracted by the clock component extraction means; and
symbol position detection means for detecting, as a symbol position of the data signal, a time when a time period corresponding to a predetermined number of clocks for the second clock signal is elapsed from the zero cross point detected by the zero cross detection means.

2. The symbol position detection device according to claim 1, wherein the data signal is a signal in which the magnitude relationship with respect to the predetermined criterion level is alternately inverted from symbol to symbol.

3. The symbol position detection device according to claim 1, wherein the zero cross detection means detects, as the zero cross point, a clock whose position corresponding to a timing closest to the timing at which the magnitude relationship with respect to the predetermined criterion level is inverted for the first clock component extracted by the clock component extraction means.

4. The symbol position detection device according to claim 3, wherein the zero cross detection means compares an absolute value of a data value for a clock immediately before and an absolute value of a data value for a clock immediately after the timing at which the magnitude relationship between the data value and the predetermined criterion level is inverted for the first clock component extracted by the clock component extraction means, and determines that the clock of which the absolute value of the data value is the smaller is a clock whose position corresponding to a timing closest to the timing at which the magnitude relationship with respect to the predetermined criterion level is inverted.

5. The symbol position detection device according to claim 1, wherein the clock determined as being at a position of the symbol in the data signal by the symbol position detection means is at a timing at which the predetermined number of clocks is passed from the zero cross point.

6. The symbol position detection device according to claim 1, wherein the symbol position detection means outputs a third clock signal with a timing when the symbol position is detected.

7. The symbol position detection device according to claim 6, wherein the zero cross detection means outputs the third clock signal when the time period corresponding to the predetermined number of clocks is elapsed from the zero cross point.

8. The symbol position detection device according to claim 7 further comprising determination means for determining a data value of the symbol in the data signal, based on timing of the third clock signal outputted by the symbol position detection means.

9. The symbol position detection device according to claim 8 further comprising:
output clock signal generation means for generating a low jitter fourth clock signal; and
output means for externally outputting the data value determined by the determination means, based on the fourth clock signal generated by the output clock signal generation means.

10. The symbol position detection device according to claim 1, wherein the zero cross detection means detects, as the zero cross point, a timing at which a "positive"/"negative" sign of the first clock signal component extracted by the clock component extraction means is inverted.

11. The symbol position detection device according to claim 1, wherein the zero cross detection means detects, as the zero cross point, the timing at which the "positive" /"negative" sign of the first clock signal component is inverted.

12. The symbol position detection device according to claim 11, wherein the data signal is a signal in which the "positive"/"negative" sign of the data value is alternately inverted from symbol to symbol.

13. The symbol position detection device according to claim 9, wherein output clock generationmeans generates the fourth clock signal on the basis of the third clock signal.

14. The symbol position detection device according to claim 1, wherein the integer is a multiple of four.

15. The symbol position detection device according to claim 5, wherein
the integer is a multiple of four; and
the predetermined number of clocks is a number of clocks in which the number is obtained by multiplying one-fourth with the multiple of four.

16. A symbol position detection method for detecting a position of a symbol in a data signal transmitted based on a first clock signal having a predetermined frequency, the method comprising:
a high frequency clock signal generation step of generating a second clock signal having a frequency of an integral multiple of a frequency of the first clock signal;
a data value acquisition step of acquiring a data value of the data signal based on timing of the second clock signal generated by the high frequency clock signal generation step;
a clock component extraction step of extracting a data value acquired by the data value acquisition step or a component of the first clock signal;
a zero cross detection step of extracting, as a zero cross point, a timing at which a magnitude relationship with respect to a predetermined criterion level is inverted for the first clock signal extracted by the clock component extraction means; and
a symbol position detection step of detecting, as a symbol position of the data signal, a time when a time period corresponding to a predetermined number of clocks for the second clock signal is elapsed from the zero cross point detected by the zero cross detection step.

17. The symbol position detection method according to claim 16, wherein the data signal is a signal in which the magnitude relationship with respect to the predetermined criterion level is alternately inverted from symbol to symbol.

## Amended claims

### Amended claims under Art. 19.1 PCT

**1.** (Amended) A symbol position detection device detecting a position for a symbol of a data signal transmitted based on a first clock signal having a predetermined frequency, the device comprising:
high frequency clock signal generation means for generating a second clock signal having a frequency of an integral multiple of a frequency of the first clock signal;
data value acquisition means for acquiring a data value of the data signal based on timing of the second clock signal generated by the high frequency clock signal generation means;
clock component extraction means for extracting a component of the first clock signal from the data value acquired by the data value acquisition means;
zero cross detection means for detecting, as a zero cross point, a timing at which a magnitude relationship with respect to a predetermined criterion level is inverted for the component of the first clock signal extracted by the clock component extraction means; and
symbol position detection means for detecting, as a symbol position of the data signal, a time when a time period corresponding to a predetermined number of clocks for the second clock signal is elapsed from the zero cross point detected by the zero cross detection means.

**2.** The symbol position detection device according to claim 1, wherein the data signal is a signal in which the magnitude relationship with respect to the predetermined criterion level is alternately inverted from symbol to symbol.
output clock signal generation means for generating a low jitter fourth clock signal; and
output means for externally outputting the data value determined by the determination means, based on the fourth clock signal generated by the output clock signal generation means.

**10.** (Cancelled)

**11.** The symbol position detection device according to claim 1, wherein the zero cross detection means detects, as the zero cross point, the timing at which the "positive" /"negative" sign of the first clock signal component is inverted.

**12.** The symbol position detection device according to claim 11, wherein the data signal is a signal in which the "positive"/"negative" sign of the data value is alternately inverted from symbol to symbol.

**13.** The symbol position detection device according to claim 9, wherein output clock generation means generates the fourth clock signal on the basis of the third clock signal.
